# EUROPEAN PATENT SPECIFICATION

(11) **EP 4 181 474 B1**
(45) Date of publication and mention of the grant of the patent: **18.11.2026**
(21) Application number: 22198511.2
(22) Date of filing: 28.09.2022
(51) Int. Cl.: H04L 27/36, H04B 1/10, H04L 25/03, H04L 27/26

(54) **TRANSCEIVER AND OPERATING METHOD THEREOF FOR REDUCING NONLINEARITY DUE TO OUT-OF-BAND EMISSION**
SENDER-EMPFÄNGER UND BETRIEBSVERFAHREN DAFÜR ZUR REDUZIERUNG DER NICHTLINEARITÄT WEGEN BANDEXTERNEN EMISSIONEN
ÉMETTEUR-RÉCEPTEUR ET SON PROCÉDÉ DE FONCTIONNEMENT POUR LA RÉDUCTION DE LA NON-LINÉARITÉ DUE AUX ÉMISSIONS HORS BANDE

(30) Priority: 12.11.2021 KR 20210155771; 19.01.2022 KR 20220007892
(43) Date of publication of application: 17.05.2023
(73) Proprietor: Samsung Electronics Co., Ltd., Gyeonggi-do 16677 (KR); POSTECH Research and Business Development Foundation, Pohang-si, Gyeongsangbuk-do (KR)
(72) Inventor: LEE, Namyoon, Pohang-si (KR); LEE, Hyowon, Pohang-si (KR)
(74) Representative: Marks & Clerk LLP

(56) References cited:
- KIM JUNGYEON ET AL: "Adaptive Non-Linear Digital Self-Interference Cancellation for Full-Duplex Wireless Systems Using Ito-Hermite Polynomials", 2018 IEEE INTERNATIONAL CONFERENCE ON COMMUNICATIONS WORKSHOPS (ICC WORKSHOPS), IEEE, 20 May 2018 (2018-05-20), pages 1 - 6, XP033369949, DOI: 10.1109/ICCW.2018.8403639
- KIM JUNGYEON ET AL: "Demo: Real-Time Implementation of Optimal Nonlinear Self-Interference Cancellation for Full-Duplex Radio", 2022 IEEE INTERNATIONAL CONFERENCE ON COMMUNICATIONS WORKSHOPS (ICC WORKSHOPS), IEEE, 16 May 2022 (2022-05-16), pages 1 - 2, XP034211745, DOI: 10.1109/ICCWORKSHOPS53468.2022.9915016
- MOLLEN CHRISTOPHER ET AL: "Spatial Characteristics of Distortion Radiated From Antenna Arrays With Transceiver Nonlinearities", IEEE TRANSACTIONS ON WIRELESS COMMUNICATIONS, IEEE SERVICE CENTER, PISCATAWAY, NJ, US, vol. 17, no. 10, 1 October 2018 (2018-10-01), pages 6663 - 6679, XP011691260, ISSN: 1536-1276, [retrieved on 20181008], DOI: 10.1109/TWC.2018.2861872
- SMAOUI MARIEM KALLEL ET AL: "Selection of a Closed-Form Expression Polynomial Orthogonal Basis for Robust Nonlinear System Identification", JOURNAL OF SIGNAL PROCESSING SYSTEMS, SPRINGER, US, vol. 81, no. 2, 11 September 2014 (2014-09-11), pages 285 - 303, XP035520853, ISSN: 1939-8018, [retrieved on 20140911], DOI: 10.1007/S11265-014-0948-2

## Description

### 1. Technical Field

The present disclosure relates to a transceiver and an operating method thereof.

### 2. Discussion of the Related Art

Orthogonal frequency-division multiplexing (OFDM) is a technology that may be used for next-generation communication including long-term evolution (LTE), which is used in mobile, fixed, and portable broadband access. In OFDM, multiple closely spaced orthogonal subcarrier signals with overlapping spectra are transmitted to carry data in parallel.

However, in OFDM, there is a large out-of-band emission (OOBE) phenomenon in which a signal flows into an adjacent channel. Accordingly, a guard band may be used to reduce an influence of interference between adjacent channels. However, the guard band uses an empty frequency band, and thus, efficiency may be decreased when using OFDM.

XP033369949, "Adaptive Non-Linear Digital Self-Interference Cancellation for Full-Duplex Systems Using Ito-Hermite Polynomials" Kim Jungyeon et al (2018-05-20) proposes an adaptive LMS filtering technique for canceling non-linearly distorted self-interference signals in full-duplex systems.

XP011691260, "Spatial Characteristics of Distortion Radiated From Antenna Arrays With Transceiver Nonlinearities", Mollen Christopher, et al (2018-10-01) discusses a framework for analysis of spatial characteristics of nonlinear distortion from arrays.

XP035520853, "Selection of a Closed-Form Expression Polynomial Orthogonal Basis for Robust Nonlinear System Identification", Smaoui Mariem Kallel et al (2014-09-11) discusses a robustness study which compares Shifted-Legendre orthogonal polynomials ad Hermite polynomials. The paper finds that for closed form expressions of the two orthogonal bases the Shifted Legendre basis is preferred.

### SUMMARY

At least one embodiment of the present disclosure provides a transceiver in which an out-of-band emission (OOBE) phenomenon is decreased.

At least one embodiment of the present disclosure provides an operating method of a transceiver in which an OOBE phenomenon is decreased.

The invention provides a transceiver as claimed in claim 1 and an operating method as claimed in claim 6.

At least some of the above and other features of the invention are set out in the claims.

### BRIEF DESCRIPTION OF THE DRAWINGS

The above and other aspects and features of the present disclosure will become more apparent by describing in detail embodiments thereof with reference to the attached drawings, in which:
FIG. 1 is a diagram for describing a transceiver according to an embodiment.
FIG. 2 is a diagram for describing an orthogonal basis generator according to an embodiment.
FIGS. 3 and 4 are illustrative diagrams for describing an adaptive filter according to an embodiment.
FIG. 5 is illustrative graphs illustrating power spectral densities (PSDs) of the transceiver according to an embodiment.
FIG. 6 is illustrative graphs illustrating a mean square error (MSE) of the transceiver according to an embodiment.

### DETAILED DESCRIPTION OF THE EMBODIMENTS

Out-of-band emission (OOBE) may be largely generated due to an orthogonal frequency-division multiplexing (OFDM) signal generating process and/or nonlinearity of a power amplifier (PA).

First, the OOBE generated in the OFDM signal generating process will be described. OFDM has high spectral efficiency by using orthogonality in a frequency domain, and is effective for channel fading. However, the OFDM has a large side lobe by each sub-carrier signal, which may cause the OOBE. Spectrum shaping filtering, guard band insertion, and/or precoding techniques at a transmitting end in a transceiver may be performed for generating a transmission signal to prevent OOBE generated in the OFDM signal generating process.

Then, the OOBE generated due to a power amplifier will be described. The nonlinearity of the power amplifier may be offset using a digital pre-distortion (DPD) technique to prevent OOBE generated due to the power amplifier. However, the digital pre-distortion technique uses the inverse of a power amplifier response, and requires calculation or calibration of the inverse according to the power amplifier connected to each transmitting end.

An adaptive filter may be used as a potential OOBE removal technology. A signal flowing into an adjacent channel needs to be removed up to a noise level to prevent OOPE. An adaptive filter may use an algorithm for tracking a time invariant filter coefficient. However, when OOBE is considered at a receiving end in a transceiver, nonlinearity may occur due to a difference between an up-converted frequency of a transmitting end and a down-converted frequency of the receiving end since a value may change over time.

In addition, a nonlinearity effect due to the power amplifier has also an influence on a signal at the receiving end, and accordingly, the effect of the power amplifier needs to be removed through modeling.

In a transceiver according to an embodiment of the present disclosure, which is one transceiver including a transmitting end and a receiving end having different frequency bands, a method of removing OOBE using a signal reflecting information on a difference between a frequency transmitted from the transmitting end and a frequency received from the receiving end in a transmission signal or transmission data with a basis function of an adaptive filter is proposed.

In particular, a transceiver according to an embodiment having an improved convergence speed and better performance at a convergence value using an Itô-Hermite polynomial having orthogonality between orders of the basis function when data transmitted from the transmitting end has a Gaussian distribution as a statistical characteristic of the data, as the basis function of the adaptive filter in the present disclosure, will be described.

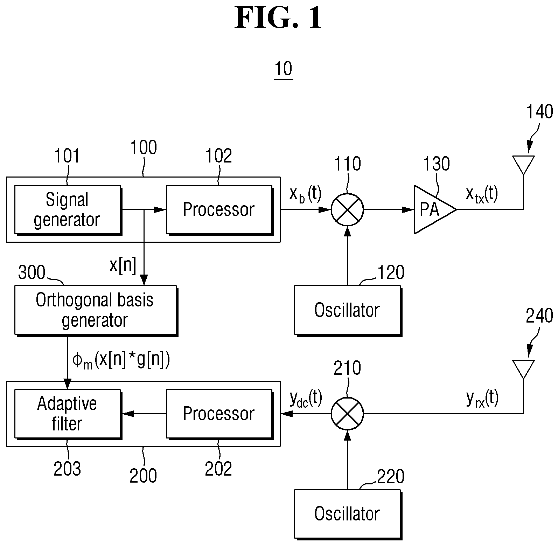

FIG. 1 is a diagram for describing a transceiver according to an embodiment.

Referring to FIG. 1, a transceiver 10 according to an embodiment includes a transmitting end and a receiving end. The transmitting end includes a transmitter 100, a multiplier 110, a power amplifier (PA) 130, an oscillator 120, and a transmitting antenna 140. The receiving end includes a receiver 200, a multiplier 210, an oscillator 220, and a receiving antenna 240; and an orthogonal basis generator 300. The multiplier 110 may be implemented by a logic circuit.

The transmitter 100 includes a signal generator 101 generating data x[n] and a processor 102 performing pulse shaping on the data x[n].

The transmitter 100 may pulse-shape the data (x[n]) according to Equation 1. ${x}_{p} \left[n\right] = \left({g}_{t}∗x\right) \left[n\right] = {\sum }_{l = 0}^{L} {g}_{t} \left[l\right] x \left[n-l\right] , {x}_{b} \left(t\right) = {\sum }_{n} {x}_{p} \left[n\right] sinc \left(Wt-n\right)$ [Equation 1].

In Equation 1, gₜ[] is a pulse shaping filter function, W is a bandwidth, xₚ is a discrete signal of the pulse-shaped data, and *x_{b}*[] is a continuous signal of the pulse-shaped data.

The data x_{b}(t) pulse-shaped through the transmitter 100 may be transferred to the multiplier 110. The multiplier 110 may up-sample the pulse-shaped data x_{b}(t) using an output of the oscillator 120, and the up-sampled data may be amplified to amplified data xₜₓ(t) as expressed in Equation 2 through the power amplifier 130.${x}_{tx} \left(t\right) = {f}_{PA} \left(Real\left({x}_{b}\left(t\right){e}^{- j 2 {πf}_{up} t}\right)\right)$ [Equation 2].

In Equation 2, f_{PA} is an operation function of the power amplifier 130, and an ideal power amplifier may have characteristics of a linear function with a gain of G, such as f_{PA}(x) = Gx. fᵤₚ may be a frequency up-converted or upscaled from a frequency of data x[n].

The amplified data xₜₓ(t) may be transmitted to the receiving antenna 240 via a channel (e.g., a wireless channel) through the transmitting antenna 140. In this case, it is assumed that the channel is wide enough to track a channel coherence time in which an influence of the channel does not significantly change for a predetermined time. The transmitter 100, the multiplier 110, the oscillator 120, and the power amplifier 130 may together perform an OFDM operation.

The amplified data xₜₓ(t) transmitted through the channel may include noise. Data yᵣₓ(t) received under an influence of the noise may be expressed in a convolutional form as in Equation 3.${y}_{rx} \left(t\right) = \left(h∗{x}_{tx}\right) \left(t\right) + v \left(t\right)$ [Equation 3].

In Equation 3, h is a channel, and v is a white Gaussian noise signal. An average of the white Gaussian noise signals may be 0, and a variance value may be determined depending on a magnitude of a noise level.

To emphasize nonlinearity due to a difference between the up-converted frequency fᵤₚ and a down-converted (or downscaled) frequency, a delay channel (hd(t) = δ(t - t₀)) may be assumed. In addition, assuming an ideal power amplifier, the received data (yᵣₓ(t)) received through the receiving antenna 240 according to Equation 3 may be converted into data y_{dc}(t) having a down-converted frequency through the multiplier 210 and an output of the oscillator 220. For example, a downscaling or a down-converting may be performed to convert the received data. The data y_{dc}(t) having the down-converted frequency f_{dw} may be generated through Equation 4. In an embodiment, the down-converted frequency f_{dw} and the up-converted frequency fᵤₚ are different from each other.${y}_{dc} \left[t\right] = {y}_{rx} \left(t\right) {e}^{j 2 {πf}_{dw} t}$ [Equation 4].

The data y_{dc}(t) having the down-converted frequency f_{dw} may include a portion having no frequency information and a portion having a frequency twice the up-converted frequency fᵤₚ, as expressed in Equation 5. In this case, in Equation 5, it is assumed that the down-converted frequency f_{dw} and the up-converted frequency fᵤₚ are the same as each other. [Equation 5] $\begin{matrix}{y}_{dc} \left(t\right) = \left({h}_{d}\left(t\right)⋆Real\left({x}_{b}\left(t\right){e}^{j 2 {πf}_{up} t}\right)\right) {e}^{- j 2 {πf}_{up} t} \\ = δ \left(t-{t}_{0}\right) ⋆ Real \left.\left({x}_{b}\left(t\right){e}^{j 2 {πf}_{up} t}\right)\right) {e}^{- j 2 {πf}_{up} t} \\ = \left({x}_{b}^{I}\left(t-{t}_{0}\right)cos\left(2{πf}_{up}\left(t-{t}_{0}\right)\right)-{x}_{b}^{Q} sin \left(2{πf}_{up}\left(t-{t}_{0}\right)\right)\right) \left(cos\left(2{πf}_{up}t\right)-jsin\left(2{πf}_{up}t\right)\right) \\ = \left(\frac{{x}_{b}^{I} \left(t-{t}_{0}\right)}{2}+j\frac{{x}_{b}^{Q} \left(t-{t}_{0}\right)}{2}\right) \left(cos\left(-2{πf}_{up}{t}_{0}\right)+jsin\left(-2{πf}_{up}{t}_{0}\right)\right) \\ + \left(\frac{{x}_{b}^{I} \left(t-{t}_{0}\right)}{2}-j\frac{{x}_{b}^{Q} \left(t-{t}_{0}\right)}{2}\right) \left(cos\left(2π\right.\left(2{f}_{up}\right)t-2{πf}_{up}{t}_{0}\right) \\ - jsin \left.\left(2π\left(2{f}_{up}\right)t-2{πf}_{up}{t}_{0}\right)\right) \\ = \frac{{x}_{b} \left(t-{t}_{0}\right)}{2} {e}^{j \left(2{πf}_{up}\left(-{t}_{0}\right)\right)} + \frac{{x}_{b}^{*} \left(t-{t}_{0}\right)}{2} {e}^{- j \left(2π\left(2{f}_{up}\right)t-2{πf}_{up}{t}_{0}\right)} \\ = {e}^{j \left(2{πf}_{up}\left(-{t}_{0}\right)\right)} δ \left(t-{t}_{0}\right) ⋆ \left(\frac{{x}_{b} \left(t\right)}{2}+\frac{{x}_{b}^{*} \left(t\right)}{2}{e}^{- j 2 π \left(2{f}_{up}\right) t}\right)\end{matrix}$

In Equation 5, ${x}_{b}^{I} \left(t\right) , {x}_{b}^{Q} \left(t\right)$ indicates a real number part and an imaginary number part of x_{b}(t), respectively, and ${x}_{b}^{*} \left(t\right)$ indicates a complex conjugate of x_{b}(t).

Referring to Equation 5, the down-converted data y_{dc}(t) is expressed in the form of a convolution of the delay channel multiplied by a constant and a transmission signal. When this signal passes through a low pass filter, the transmission signal may remain.

On the other hand, when the up-converted frequency fᵤₚ and the down-converted frequency f_{dw} are different from each other, the data y_{dc}(t) having the down-converted frequency f_{dw} may be expressed through Equation 6. [Equation 6] $\begin{matrix}{y}_{dc} \left(t\right) = \left({h}_{d}\left(t\right)⋆Real\left({x}_{b}\left(t\right){e}^{j 2 {πf}_{up} t}\right)\right) {e}^{- j 2 {πf}_{dw} t} \\ = δ \left(t-{t}_{0}\right) ⋆ Real \left.\left({x}_{b}\left(t\right){e}^{j 2 {πf}_{up} t}\right)\right) {e}^{- j 2 {πf}_{dw} t} \\ = \left({x}_{b}^{I}\left(t-{t}_{0}\right)cos\left(2{πf}_{up}\left(t-{t}_{0}\right)\right)-{x}_{b}^{Q} sin \left(2{πf}_{up}\left(t-{t}_{0}\right)\right)\right) \left(\begin{matrix}cos \left(2{πf}_{dw}t\right) - \\ jsin \left(2{πf}_{dw}t\right)\end{matrix}\right) \\ = \left(\frac{{x}_{b}^{I} \left(t-{t}_{0}\right)}{2}-j\frac{{x}_{b}^{Q} \left(t-{t}_{0}\right)}{2}\right) \left(cos\left(2π\left({f}_{up}+{f}_{dw}\right)t-{f}_{up}{t}_{0}\right)-j sin\left(\begin{matrix}2 π \left({f}_{up}+{f}_{dw}\right) t - \\ {f}_{up} {t}_{0}\end{matrix}\right)\right) + \left(\frac{{x}_{b}^{I} \left(t-{t}_{0}\right)}{2}+j\frac{{x}_{b}^{Q} \left(t-{t}_{0}\right)}{2}\right) \left(cos\left(2π\left({f}_{up}-{f}_{dw}\right)t-{f}_{up}{t}_{0}\right)+j sin\left(\begin{matrix}2 π \left({f}_{up}-{f}_{dw}\right) t - \\ {f}_{up} {t}_{0}\end{matrix}\right)\right) = \frac{{x}_{b} \left(t-{t}_{0}\right)}{2} {e}^{j \left(2π\left({f}_{up}-{f}_{dw}\right)t-{f}_{up}{t}_{0}\right)} + \frac{{x}_{b}^{*} \left(t-{t}_{0}\right)}{2} {e}^{- j \left(2π\left({f}_{up}+{f}_{dw}\right)t-{f}_{up}{t}_{0}\right)} \\ = {e}^{- j 2 {πf}_{dw} {t}_{0}} δ \left(t-{t}_{0}\right) ⋆ \left(\frac{{x}_{b} \left(t\right)}{2}{e}^{j 2 π \left({f}_{up}-{f}_{dw}\right) t}+\frac{{x}_{b}^{*} \left(t\right)}{2}{e}^{- j 2 π \left({f}_{up}+{f}_{dw}\right) t}\right)\end{matrix}$

Through Equation 6, it may be confirmed that when the up-converted frequency fᵤₚ and the down-converted frequency f_{dw} are different from each other, a time variant signal by a frequency difference and a frequency sum exists.

The data y_{dc}(t) having the down-converted frequency f_{dw} is transmitted to the receiver 200.

The data y_{dc}(t) having the down-converted frequency f_{dw} may be pulse-shaped through a processor 202, and may then be transmitted to an adaptive filter 203.

The adaptive filter 203 may receive an orthogonal basis generated from the orthogonal basis generator 300 to track an unknown system parameter to be described later.

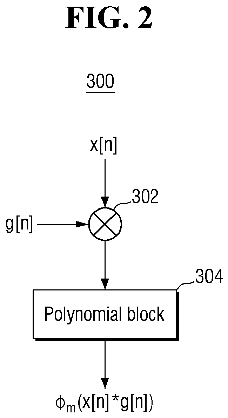

In this case, the orthogonal basis generator 300 may receive the data x[n] generated from the transmitter 100, more specifically, the signal generator 101, and generate the orthogonal basis Φₘ(x) from the received data x[n]. The generation of the orthogonal basis Φₘ(x) will be described in detail with reference to FIG. 2.

FIG. 2 is a diagram for describing an orthogonal basis generator according to an embodiment.

Referring to FIGS. 1 and 2, it can be seen that the data x[n] approaches a Gaussian distribution as a size of fast Fourier transform (FFT) increases, through inverse fast Fourier transform (IFFT) through the transmitter 100, as expressed in Equation 7. $x \left[n\right] = \frac{1}{N} {\sum }_{k = 0}^{N - 1} {x}_{F} \left[k\right] {e}^{j 2 π \left(n/N\right) k}$ [Equation 7].

In Equation 7, N is a size of the FFT, and x_{F} is a signal in a frequency domain of the data x[n].

In this case, a basis used in an Itô-Hermite polynomial may have the form of a polynomial as expressed in Equation 8.${Ψ}_{m} \left(x\right) = {\left|x\right|}^{2 m - 1} x$ [Equation 8].

In this case, when the input data x[n] for the polynomial follows a Gaussian distribution as expressed in Equation 9, the respective orders may have orthogonality as expressed in Equation 10. [Equation 9] ${Φ}_{m} \left(x\right) = {\sum }_{i = 0}^{\frac{m - 1}{2}} {\left(-1\right)}^{i} i ! \left(\begin{matrix}\frac{m + 1}{2} \\ i\end{matrix}\right) \left(\begin{matrix}\frac{m - 1}{2} \\ i\end{matrix}\right) X {\left|X\right|}^{m - 1 - 2 i}$$E \left\{{Φ}_{m}\left(x\right){Φ}_{m ′}^{*}\left(y\right)\right\} = \left(\frac{m + 1}{2}\right) ! \left(\frac{m - 1}{2}\right) ! E \left\{xy*\right\} {\left|E\left\{xy*\right\}\right|}^{m - 1} δ \left[m-m′\right]$ [Equation 10].

In particular, when OFDM signals are transformed into time domain signals by an inverse Fourier transform as expressed in Equation 7, the OFDM signals may be expressed as the sum of frequency domain signals.

In particular, when Equation 7 is considered from a statistical point of view, in a case where a value of N becomes large, the data x[n] approaches the Gaussian distribution by a central limit theorem.

In the present disclosure, the OFDM signals are used at the transmitting end, and when the Itô-Hermite polynomial is used, the respective orders may have near orthogonality. When the basis of the polynomial as described above is used, nonlinearity of a system including the transceiver 10 may be tracked with the adaptive filter 203, and the OFDM signals have near orthogonality by passing through a basis function, and thus, a convergence speed and performance may be improved.

Specifically, the orthogonal basis generator 300 receives the data x[n], and multiplies the data x[n] by a Gaussian characteristic value g[n] obtained by extracting a Gaussian characteristic from the data x[n] through a multiplier 302. For example, the Gaussian characteristic value g[n] may be expressed as in Equation 11. [Equation 11] $g \left[n\right] = {e}^{j 2 π \left(Δf/BW\right) n}$

In Equation 11, BW is a bandwidth.

The product of the generated data x[n] and the Gaussian characteristic value g[n] through the multiplier 302 may be transmitted to a polynomial block 304 to become an input to the Itô-Hermite polynomial of Equation 9. The polynomial block 304 may be implemented by a logic circuit.

Therefore, an orthogonal basis Φₘ(x[n]*g[n]) of Equation 9 may be generated.

In this case, an orthogonal basis as expressed in Equation 12 (EQ12) may be generated by using an influence generated due to a difference between the up-converted frequency fᵤₚ and the down-converted frequency f_{dw} as an input to the Itô-Hermite polynomial. [EQ12] ${Φ}_{m} \left(x\left[n\right]{e}^{j 2 π \frac{\left({f}_{up}-{f}_{dw}\right)}{BW} n}\right) = {Φ}_{m} \left({x}_{OOBE}\left[n\right]\right) , {x}_{OOBE} \left[n\right] = x \left[n\right] {e}^{j 2 π \frac{\left({f}_{up}-{f}_{dw}\right)}{BW} n}$

The orthogonal basis generated by the orthogonal basis generator 300 may be used in the adaptive filter 203.

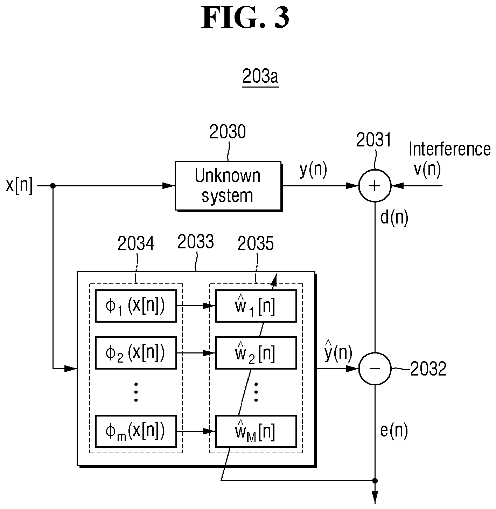

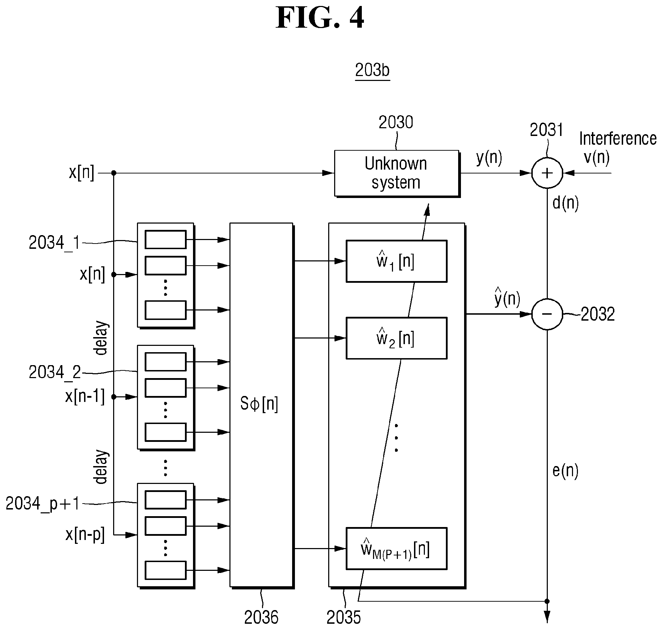

FIGS. 3 and 4 are illustrative diagrams for describing an adaptive filter according to an embodiment.

First, referring to FIGS. 1 to 3, an unknown system parameter for an unknown system 2030 may be tracked through an adaptive filter 203a. The adaptive filter of FIG. 1 may be implemented with the adaptive filter 203a.

For example, when the number of taps of the adaptive filter 203a is p, a vector x[n] = [*x*[*n*]*, x*[*n* - 1],···*x*[*n* - *p +* 1]]^{H} of input data x[n] of an n-th time and d[n](= y[n] + v[n]) in which noise or interference is added to an output signal y[n] of the unknown system 2030 may be required.

The adaptive filter 203a may output an output signal ŵ[n] through a block 2033 in which ŵ[n] = [ŵ₀[*n*], ŵ₁[*n*],···ŵ_{*p-*1}[*n*]]^{H} generated through an estimated weight filter 2035 is multiplied by orthogonal bases (**Φ**₁(*x*[*n*]), **Φ**₂(*x*[*n*]), to **Φ***ₘ*(*x*[*n*])) 2034 received from the orthogonal basis generator 300.

In this case, a difference between an estimated output signal *ŷ*[n] of the unknown system 2030 and an actual signal d(n) of the unknown system 2030 may be defined as an error e[n].

In this case, the adaptive filter 203a needs to decrease the square (||e[n]||²) of a magnitude of an error, which is a cost function (C[n]). The adaptive filter 203a may decrease the square (||e[n]||²) of the magnitude of the error through Equation 13 based on steepest descent. [Equation 13] $\begin{matrix}e \left[n\right] = d \left[n\right] - \hat{y} \left[n\right] = d \left[n\right] - {\hat{w}}^{H} \left[n\right] x \left[n\right] \\ C \left[n\right] = E \left\{{\left‖e\left[n\right]\right‖}^{2}\right\} \\ {∇}_{{\hat{W}}^{H}} C \left[n\right] = 2 E \left\{{∇}_{{\hat{W}}^{H}}e\left[n\right]e*\left[n\right]\right\} \\ {∇}_{{\hat{W}}^{H}} e \left[n\right] = - x \left[n\right] \\ \hat{E} \left\{x\left[n\right]e*\left[n\right]\right\} = \frac{1}{N} {\sum }_{i = 0}^{N - 1} x \left[n-i\right] e * \left[n-i\right] = x \left[n\right] e * \left[n\right] , \left(N=1\right) \\ {\hat{w}}^{H} \left[n+1\right] = {\hat{w}}^{H} \left[n\right] - \frac{μ}{2} {∇}_{{\hat{w}}^{H}} C \left[n\right] \\ {\hat{w}}^{H} \left[n+1\right] = {\hat{w}}^{H} \left[n\right] + \frac{μ}{2} x \left[n\right] e * \left[n\right]\end{matrix}$

In Equation 13, E{·} is an expected value, and µ is a step size of the steepest descent and may have an influence on a convergence speed of least mean square (LMS).

Equation 13 has an expected value in a gradient of the cost function, but a calculation may be performed using an empirical expected value. For example, a case where N = 1, which is the simplest case of calculating an empirical expected value, may be considered.

As described above, by using an orthogonal basis having linearity as a basis for the least mean square, tracking efficiency for the unknown system parameter may be increased.

Referring to FIGS. 1, 2, and 4, an adaptive filter 203b may perform parameter tracking for an unknown system 2030 including a time variant system. The adaptive filter 203 of FIG. 1 may be implemented by the adaptive filter 203b.

For example, in consideration of a non-linear time delay of the power amplifier 130 as expressed in Equation 14, when the Itô-Hermite polynomial is used, whitening (or noise whitening) can be performed through a covariance block 2036 performing a covariance matrix operation on a time sample and an estimated weight filter 2035. [Equation 14] ${f}_{PA} \left(x\left[n\right]\right) = {\sum }_{m = 1 , odd}^{M} {\sum }_{{q}_{1} = 0}^{{Q}_{1}} {\sum }_{{q}_{2 = 0}}^{{Q}_{2}} {d}_{{mq}_{1} {q}_{2}} x \left[n-{q}_{1}\right] {\left|x\left[n-{q}_{2}\right]\right|}^{m - 1}$

The adaptive filter 203b may use orthogonal bases (**Φ**₁(*x*[*n*]), **Φ₂**(*x*[*n*]), to **Φ***ₘ*(*x*[*n*]))) 2034_1 to 2034_p+1 for each of delayed data x[n] to x[n-p].

For example, a cubic Itô-Hermite polynomial of the delayed data x[n] to x[n-p] may calculate empirical covariance using vectors in which data on delay times are accumulated as expressed in Equation 15, a whitening matrix as expressed in Equation 16 and a whitening method using the whitening matrix may be applied in order to decrease correlation according to the delayed data x[n] to x[n-p]. [Equation 15] $\begin{matrix}{Φ}_{3 , P} \left[n\right] = {\left[{Φ}_{3}\left({x}_{OOBE}\left[n\right]\right), {Φ}_{3}\left({x}_{OOBE}\left[n-1\right]\right), ⋯, {Φ}_{3}\left({x}_{OOBE}\left[n-P\right]\right)\right]}^{T} \\ {Σ}_{3} = E \left[{Φ}_{3 , P}\left[n\right]{Φ}_{3 , P}{\left[n\right]}^{H}\right] ≃ \frac{1}{N} {\sum }_{n = 0}^{N - 1} {Φ}_{3 , P} \left[n\right] {Φ}_{3 , P} {\left[n\right]}^{H}\end{matrix}$ [Equation 16] $\begin{matrix}{Σ}_{3} = {VDV}^{H} \\ \\ S = {D}^{- 1 / 2} {V}^{H} \\ \\ \overline{{Φ}_{3 , P}} \left[n\right] = S {Φ}_{3 , P} \left[n\right]\end{matrix}$

Φ_{3,P}[n] of Equation 15 is a vector of delay times having a cubic Itô-Hermite polynomial, and empirical covariance using a time of n according to a system including the transceiver 10 may be used as the covariance.

In addition, Equation 16 may represent a method of generating a whitening matrix S by using an eigen value decomposition of the covariance of Equation 15 and a method of generating a new basis *̅*̅Φ̅*̅*̅_̅{̅3̅*̅,̅P̅*̅}̅[*n*] with low correlation from the whitening matrix.

A correlation coefficient according to a time may be decreased with reference to the example as described above, and in particular, covariance according to each time may have the form of a block diagonal matrix using the fact that a correlation between respective orders is close to 0 when an Itô-Hermite polynomial having orthogonality between the orders is used, and the block diagonal matrix may have a complexity gain as compared with a matrix of the same size.

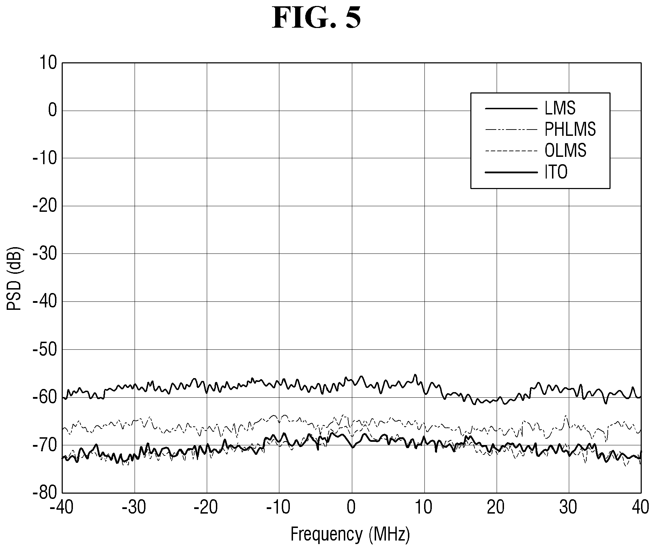

FIG. 5 includes graphs illustrating power spectral densities (PSDs) of the transceiver according to an embodiment.

Referring to FIG. 5, PSD graphs according to a frequency are illustrated.

It can be seen that power spectral density (PSD) characteristics are improved when the adaptive filter uses the LMS using the Itô-Hermite polynomial using the orthogonal basis described above with reference to FIGS. 1 to 4 than when the adaptive filter uses least mean square (LMS), parallel Hammerstein model LMS (PHLMS), and orthogonal LMS (OLMS).

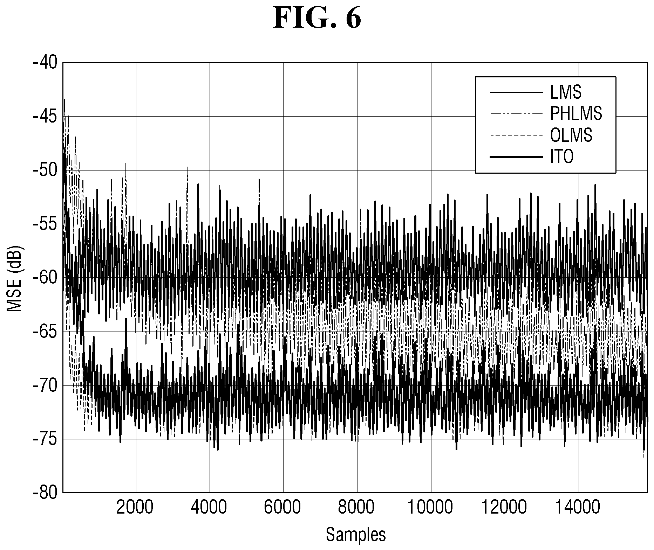

FIG. 6 includes graphs illustrating a mean square error (MSE) of the transceiver according to an embodiment.

Referring to FIG. 6, mean square error (MSE) graphs according to data samples of a transmitter are illustrated.

It can be seen that mean square error (MSE) characteristics are improved more when the adaptive filter uses the LMS using the Itô-Hermite polynomial using the orthogonal basis described above with reference to FIGS. 1 to 4 than when the adaptive filter uses least mean square (LMS), parallel Hammerstein model LMS (PHLMS), and orthogonal LMS (OLMS).

Embodiments of the present disclosure have been described hereinabove with reference to the accompanying drawings, but the present disclosure is not limited to the above-described embodiments, and may be implemented in various different forms.

## Claims

1. A transceiver for up-converting a frequency of input data to transmit data of a first frequency, and down-converting the first frequency to a second frequency different from the first frequency and receiving data having the second frequency, comprising:
an orthogonal basis generator (300) configured to receive the input data and to generate an orthogonal basis,
wherein the orthogonal basis generator (300) comprises:
a multiplier (302) configured to multiply the input data by a Gaussian characteristic value obtained by extracting a Gaussian characteristic of the input data to generate an out-of-band emission, OOBE, value; and
a polynomial block (304) configured to generate the orthogonal basis by using the OOBE value as an input to an Itô-Hermite polynomial,
wherein the transmitted data has a time delay, the transceiver further comprises an adaptive filter (203) configured to receive the orthogonal basis, and the adaptive filter (203) comprises:
a covariance block (2036) configured to perform a covariance matrix operation on a plurality of time-delayed data of the transmitted data; and
an estimated weight filter (2035) configured to generate an estimated system output signal using a covariance output generated through the covariance block (2036) and an estimated weight filter using the orthogonal bases;
wherein the covariance block (2036) is configured to perform whitening through the covariance matrix operation.

2. The transceiver of claim 1, wherein the Gaussian characteristic value uses a difference between the first frequency and the second frequency.

3. The transceiver of claim 1 or 2, wherein the transmitted data is generated through orthogonal frequency-division multiplexing.

4. The transceiver of any one of claims 1 to 3, wherein the adaptive filter (203) is configured to generate an error by calculating a difference between the estimated system output signal and a target signal.

5. A transceiver of any one of claims 1 to 4, further comprising:
a transmitter (100) configured to transmit data of the first frequency; and
a receiver (200) configured to receive the orthogonal basis from the orthogonal basis generator (300) and to receive the transmitted data for down-converting a frequency of the received data to a second frequency different from the first frequency.

6. An operating method of a transceiver, comprising:
up-converting, by a transmitter (100), a frequency of input data to transmit data of a first frequency;
generating, by an orthogonal basis generator (300), an orthogonal basis based on the input data received from the transmitter (100); and
receiving, by a receiver (200), the orthogonal basis from the orthogonal basis generator (300) and the transmitted data to downscale a frequency of the transmitted data to a second frequency different from the first frequency,
wherein the generating of the orthogonal basis comprises:
multiplying the input data by a Gaussian characteristic value obtained by extracting a Gaussian characteristic of the input data to generate an out of band emission (OOBE) value, through a multiplier (302) in the orthogonal basis generator (300); and
generating the orthogonal basis by using the OOBE value as an input to an Itô-Hermite polynomial, through a polynomial block (304) in the orthogonal basis generator (300)
wherein in the step of receiving the orthogonal basis the transmitted data has a time delay, the orthogonal basis is received by an adaptive filter (203) in the receiver (200) and the step of receiving further comprises:
performing by a covariance block (2036) a covariance matrix operation on a plurality of time-delayed data of the transmitted data; and
an generating by estimated weight filter (2035) an estimated system output signal using a covariance output generated through the covariance block (2036) and an estimated weight filter;
whereby the covariance block (2036) performs whitening through the covariance matrix operation.

## Patentansprüche

1. Sendeempfänger zum Hochkonvertieren einer Frequenz von Eingangsdaten, um Daten einer ersten Frequenz zu senden, und Herunterkonvertieren der ersten Frequenz auf eine zweite Frequenz, die sich von der ersten Frequenz unterscheidet, und Empfangen von Daten, die die zweite Frequenz aufweisen, umfassend:
einen Orthogonalbasis-Generator (300), der so konfiguriert ist, dass er die Eingangsdaten empfängt und eine Orthogonalbasis erzeugt,
wobei der Orthogonalbasis-Generator (300) umfasst:
einen Multiplizierer (302), der so konfiguriert ist, dass er die Eingangsdaten mit dem Wert einer Gauß-Charakteristik, der durch Extrahieren einer Gauß-Charakteristik der Eingangsdaten erhalten wird, multipliziert, um einen Wert der Außerbandaussendungen, OOBE, zu erzeugen; und
einen Polynomblock (304), der so konfiguriert ist, dass er die Orthogonalbasis unter Verwendung des OOBE-Wertes als Eingabe für ein Ito-Hermite-Polynom erzeugt,
wobei die gesendeten Daten eine Zeitverzögerung aufweisen, der Sendeempfänger weiter ein adaptives Filter (203) umfasst, das so konfiguriert ist, dass es die Orthogonalbasis empfängt, und das adaptive Filter (203) umfasst:
einen Kovarianzblock (2036), der so konfiguriert ist, dass er eine Kovarianzmatrixoperation an einer Vielzahl von zeitverzögerten Daten der gesendeten Daten durchführt; und
ein geschätztes Gewichtsfilter (2035), das so konfiguriert ist, dass es ein geschätztes Systemausgangssignal unter Verwendung eines Kovarianzausgangs erzeugt, der durch den Kovarianzblock (2036) und ein geschätztes Gewichtsfilter unter Verwendung der Orthogonalbasen erzeugt wurde;
wobei der Kovarianzblock (2036) so konfiguriert ist, dass er durch die Kovarianzmatrixoperation eine Weißung durchführt.

2. Sendeempfänger nach Anspruch 1, wobei der Wert der Gauß-Charakteristik eine Differenz zwischen der ersten Frequenz und der zweiten Frequenz verwendet.

3. Sendeempfänger nach Anspruch 1 oder 2, wobei die gesendeten Daten durch orthogonales Frequenzmultiplex erzeugt werden.

4. Sendeempfänger nach einem der Ansprüche 1 bis 3, wobei das adaptive Filter (203) so konfiguriert ist, dass es durch Berechnen einer Differenz zwischen dem geschätzten Systemausgangssignal und einem Zielsignal einen Fehler erzeugt.

5. Sendeempfänger nach einem der Ansprüche 1 bis 4, weiter umfassend:
einen Sender (100), der so konfiguriert ist, dass er Daten der ersten Frequenz sendet; und
einen Empfänger (200), der so konfiguriert ist, dass er die Orthogonalbasis von dem Orthogonalbasis-Generator (300) empfängt und die gesendeten Daten empfängt, um eine Frequenz der empfangenen Daten auf eine sich von der ersten Frequenz unterscheidende zweite Frequenz herunterzukonvertieren.

6. Betriebsverfahren für einen Sendeempfänger, umfassend:
Hochkonvertieren einer Frequenz von Eingangsdaten durch einen Sender (100), um Daten einer ersten Frequenz zu senden;
Erzeugen einer Orthogonalbasis durch einen Orthogonalbasis-Generator (300) auf Basis der von dem Sender (100) empfangenen Eingangsdaten; und
Empfangen der Orthogonalbasis von dem Orthogonalbasis-Generator (300) und der gesendeten Daten durch einen Empfänger (200), um eine Frequenz der gesendeten Daten auf eine sich von der ersten Frequenz unterscheidende zweite Frequenz herunterzuskalieren,
wobei das Erzeugen der Orthogonalbasis umfasst:
Multiplizieren der Eingangsdaten mit dem Wert einer Gauß-Charakteristik, der durch Extrahieren einer Gauß-Charakteristik der Eingangsdaten erhalten wird, um einen Wert der Außerbandaussendungen (OOBE) zu erzeugen, durch einen Multiplizierer (302) in dem Orthogonalbasis-Generator (300); und
Erzeugen der Orthogonalbasis unter Verwendung des OOBE-Wertes als Eingabe für ein Ito-Hermite-Polynom, durch einen Polynomblock (304) in dem Orthogonalbasis-Generator (300),
wobei in dem Schritt des Empfangens der Orthogonalbasis die gesendeten Daten eine Zeitverzögerung aufweisen, die Orthogonalbasis von einem adaptiven Filter (203) in dem Empfänger (200) empfangen wird, und der Schritt des Empfangens weiter umfasst:
Durchführen einer Kovarianzmatrixoperation an einer Vielzahl von zeitverzögerten Daten der gesendeten Daten durch einen Kovarianzblock (2036); und
ein Erzeugen eines geschätzten Systemausgangssignals durch ein geschätztes Gewichtsfilter (2035) unter Verwendung eines Kovarianzausgangs, der durch den Kovarianzblock (2036) und ein geschätztes Gewichtsfilter erzeugt wurde;
wodurch der Kovarianzblock (2036) durch die Kovarianzmatrixoperation eine Weißung durchführt.

## Revendications

1. Émetteur-récepteur pour la conversion ascendante d'une fréquence de données d'entrée pour transmettre des données d'une première fréquence, et la conversion descendante de la première fréquence en une seconde fréquence différente de la première et recevoir des données présentant la seconde fréquence, comprenant :
un générateur de base orthogonale (300) configuré pour recevoir les données d'entrée et pour générer une base orthogonale,
dans lequel le générateur de base orthogonale (300) comprend :
un multiplicateur (302) configuré pour multiplier les données d'entrée par une valeur caractéristique gaussienne obtenue en extrayant une caractéristique gaussienne des données d'entrée pour générer une valeur d'émission hors bande, OOBE ; et
un bloc polynomial (304) configuré pour générer la base orthogonale en utilisant la valeur OOBE comme entrée d'un polynôme d'Itô-Hermite,
dans lequel les données transmises présentent un retard de temps, l'émetteur-récepteur comprend en outre un filtre adaptatif (203) configuré pour recevoir la base orthogonale, et le filtre adaptatif (203) comprend :
un bloc de covariance (2036) configuré pour réaliser une opération de matrice de covariance sur une pluralité de données à retard de temps parmi les données transmises ; et
un filtre de poids estimé (2035) configuré pour générer un signal de sortie de système estimé en utilisant une sortie de covariance générée par l'intermédiaire du bloc de covariance (2036) et d'un filtre de poids estimé en utilisant les bases orthogonales ;
dans lequel le bloc de covariance (2036) est configuré pour réaliser un blanchiment par l'intermédiaire de l'opération de matrice de covariance.

2. Émetteur-récepteur selon la revendication 1, dans lequel la valeur caractéristique gaussienne utilise une différence entre la première fréquence et la seconde fréquence.

3. Émetteur-récepteur selon la revendication 1 ou 2, dans lequel les données transmises sont générées par multiplexage par division de fréquence orthogonale.

4. Émetteur-récepteur selon l'une quelconque des revendications 1 à 3, dans lequel le filtre adaptatif (203) est configuré pour générer une erreur en calculant une différence entre le signal de sortie de système estimé et un signal cible.

5. Émetteur-récepteur selon l'une quelconque des revendications 1 à 4, comprenant en outre :
un transmetteur (100) configuré pour transmettre des données de la première fréquence ; et
un récepteur (200) configuré pour recevoir la base orthogonale à partir du générateur de base orthogonale (300) et pour recevoir les données transmises pour la conversion descendante d'une fréquence des données reçues en une seconde fréquence différente de la première fréquence.

6. Procédé de fonctionnement d'un émetteur-récepteur, comprenant :
la conversion ascendante, par un émetteur (100), d'une fréquence de données d'entrée pour transmettre des données d'une première fréquence ;
la génération, par un générateur de base orthogonale (300), d'une base orthogonale basée sur les données d'entrée reçues à partir du transmetteur (100) ; et
la réception, par un récepteur (200), de la base orthogonale à partir du générateur de base orthogonale (300) et des données transmises pour réduire une fréquence des données transmises en une seconde fréquence différente de la première fréquence,
dans lequel la génération de la base orthogonale comprend :
la multiplication des données d'entrée par une valeur caractéristique gaussienne obtenue en extrayant une caractéristique gaussienne des données d'entrée pour générer une valeur d'émission hors bande (OOBE), par l'intermédiaire d'un multiplicateur (302) dans le générateur de base orthogonale (300) ; et
la génération de la base orthogonale en utilisant la valeur OOBE comme entrée d'un polynôme d'Itô-Hermite, par l'intermédiaire d'un bloc polynomial (304) dans le générateur de base orthogonale (300)
dans lequel, dans l'étape de réception de la base orthogonale, les données transmises présentent un retard de temps, la base orthogonale est reçue par un filtre adaptatif (203) dans le récepteur (200) et l'étape de réception comprend en outre :
la réalisation par un bloc de covariance (2036) d'une opération de matrice de covariance sur une pluralité de données à retard de temps parmi les données transmises ; et
la génération par un filtre de poids estimé (2035) d'un signal de sortie de système estimé en utilisant une sortie de covariance générée par l'intermédiaire du bloc de covariance (2036) et d'un filtre de poids estimé ;
moyennant quoi le bloc de covariance (2036) réalise un blanchiment par l'intermédiaire de l'opération de matrice de covariance.
